# EUROPEAN PATENT SPECIFICATION

(11) **EP 0 815 931 B1**
(45) Date of publication and mention of the grant of the patent: **06.09.2000**
(21) Application number: 97110142.3
(22) Date of filing: 20.06.1997
(51) Int. Cl.: B01J 2/00, B05B 7/14, B65G 53/10

(54) **Method and apparatus for spraying powdered material using pulsating vibration air**
Verfahren und Vorrichtung zur Pulverbeschichtung mittels eines pulsierenden Vibrationsluftstroms
Méthode et dispositif de pulvérisation de poudre à l'aide d'un courant d'air de vibration pulsatoire

(30) Priority: 21.06.1996 JP 16155396; 16.06.1997 JP 15882597
(43) Date of publication of application: 07.01.1998
(73) Proprietor: KYOWA HAKKO KOGYO CO., LTD., Chiyoda-ku, Tokyo 100-8185 (JP)
(72) Inventor: Kiyoshi, Morimoto, Mishima-city, Shizuoka (JP); Yasushi, Watanabe, Numazu-city, Shizuoka (JP); Kimiaki, Hayakawa, Sunto-gun, Shizuoka (JP); Sanji, Tokuno, Shinagawa-ku, Tokyo (JP)
(74) Representative: Sajda, Wolf E., Dipl.-Phys.

(56) References cited:
- DE-A- 2 437 856
- DE-A- 3 418 997
- FR-A- 2 270 070
- US-A- 3 976 332
- US-A- 4 420 279
- US-A- 5 332 337

## Description

This invention relates to a newly developed spray apparatus and a method for spraying powdered material in an extremely small quantity activated by pulsating vibration air, and more particularly to a spray apparatus for spraying bulky and soft powdered material with large specific volume or powdered material with poor fluidity without causing clogging.

Manufacturing of tablets is generally comprised of weighing, mixing, granulation, tableting and inspection process. A trace of an additive, which is described in a statement of the powers of medicine, is added to the basis of the medicine in the process of mixing or tableting.

A spray apparatus for effectively spraying powdered material in extremely small quantities is disclosed in JP-A-7 213 887 (filed on Feb. 1, 1994).

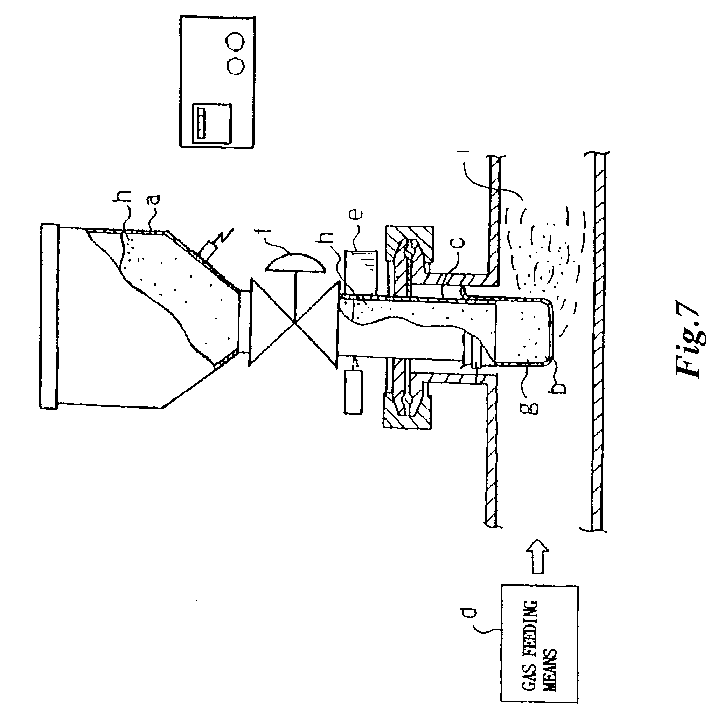

This spray apparatus as shown in Fig.7, is provided with a storage tank a with a valve f at the bottom end in which powdered material h is stored. The spray apparatus is also provided with a reservoir c which has a body for storing the powdered material h, a filter cloth b formed with at least a plurality of bores g at the tip end, and a gas feeding means d.

According to the spray apparatus so constructed, powdered material h can be continuously sprayed through the bores g when the filter cloth b of the reservoir c is forcedly vibrated by a vibrator e while driving gas is fed into a communication pipe i from the gas feeding means d.

However in such a spray apparatus, bulky and soft powdered material with a large specific volume, in which the ratio of air to powder is rather large, or the powdered material with poor fluidity, cannot be sprayed for a long period without causing clogging since such powdered material stored in the reservoir c would be caught in the bores g of the filter cloth b while the spray is repeatedly used. Namely, clogging has often been caused in such a spray apparatus. Further, considerable time is needed in that the powdered material thus attached to the filter cloth b amounts to a constant quantity, and spray amount per unit time becomes constant.

The present invention has been proposed to solve the above-mentioned problems. Accordingly, the primary object of the invention is to provide a spray apparatus for spraying powdered material activated by pulsating vibration air with a simple construction wherein even bulky and soft powdered material with large specific volume in which the ratio of air to powder is rather large, or the powdered material has poor fluidity can be sprayed quantitatively and continuously without causing clogging, and a method for spraying powdered material using the spray apparatus of the present invention.

According to the spray apparatus for spraying powdered material activated by pulsating vibration air in the present invention, the spray apparatus comprises an elastic membrane formed with an opening, a tank for storing powdered material provided with the elastic membrane at the bottom opening thereof, and pulsating vibration air generating means for supplying pulsating vibration air to the elastic membrane. The spray apparatus so constructed is designed to uniformly and diffusely spray powdered material stored in the tank from the opening of the elastic membrane when the elastic membrane is forcedly vibrated up and down when receiving pulsating vibration air from the pulsating vibration air generating means.

According to a further development of the spray apparatus of the present invention, the opening of the elastic membrane is a cut opening and is formed at the center of the elastic membrane.

According to a further development of the spray apparatus of the present invention, the opening of the elastic membrane is comprised of plural little bores with various shapes or almost equal shape.

Also proposed is a separate spray apparatus of the present invention, in which a communication pipe communicating with the bottom opening of the tank is further provided and has at one end an injection port and at the other end a connecting port to the pulsating vibration air generating means. The elastic membrane is forcedly vibrated up and down to make the opening of the elastic membrane open and close when the pulsating vibration air generating means is activated so that the powdered material is uniformly and diffusely sprayed from the injection port.

It is still further proposed a spray apparatus for spraying powdered material in which its application is specified for spraying lubricant on medical tablets when they are manufactured.

In claims 6 - 9, a method for spraying of the present invention is disclosed which uses the spray apparatus according to the invention utilizing its advantages.

With the present invention, there is no trouble of causing cross contamination since the spray is provided with no mechanical driving means like a vibrator. And there is no trouble from clogging since the cut opening or the little bores respectively formed in the elastic membrane open in such a manner that the opening or the bores are deformed to widely open only when emitting the powdered material stored in the tank. In addition, there is no trouble nor inclination that the powdered material stored in the tank remains since the elastic membrane itself, which constitutes a bottom of the tank, is vibrated up and down so as to emit all the powdered material stored in the tank.

Also, according to the present invention, one advantage is that controlling of the amount of spraying is very easy and accurate by only controlling the application of pulsating vibration air. Another advantage is that soft powdered material with a large specific volume in which the ratio of air to powder is relatively large, or powdered material with poor fluidity can be uniformly and quantitatively sprayed without causing clogging by applying pulsating vibration air which has vibration energy to move the elastic membrane up and down in relatively large quantity.

Further according to the present invention, cleaning is not required and maintenance is easy because the filter cloth which has been used in the prior spray apparatus is not necessary. Furthermore, with the present invention, the construction of the spray apparatus can be more simplified because vibration means like a vibrator are not necessary at all. Still further with the present invention, even liquid-like or slurry material can be stored in the tank for spraying.

On the contrary in the prior art, as far as the inventors know, liquid-like material could not be continuously sprayed without causing clogging due to the leakage of material from the filter cloth provided with the tank.

### BRIEF DESCRIPTION OF THE DRAWINGS

Fig. 1 is a vertical sectional view of a spray apparatus for spraying powdered material activated by pulsating vibration air according to the invention.

Fig. 2 is a plan view of one embodiment of an elastic membrane.

Figs. 3 (a) - (c) show how the elastic membrane is operated when receiving pulsating vibration air.

Fig. 4 is a plan view of a separate embodiment of an elastic membrane.

Fig. 5 shows one example of a spray apparatus for spraying lubricant activated by pulsating vibration air according to the present invention.

Fig. 6 is an enlarged vertical sectional view of "X" in Fig. 5.

Fig. 7 is a front view, partially in section, of the prior art of the spray apparatus for spraying powdered material.

### DETAILED DESCRIPTION OF A PREFERRED EMBODIMENT

Preferred embodiment of the present invention will be described referring to the drawings.

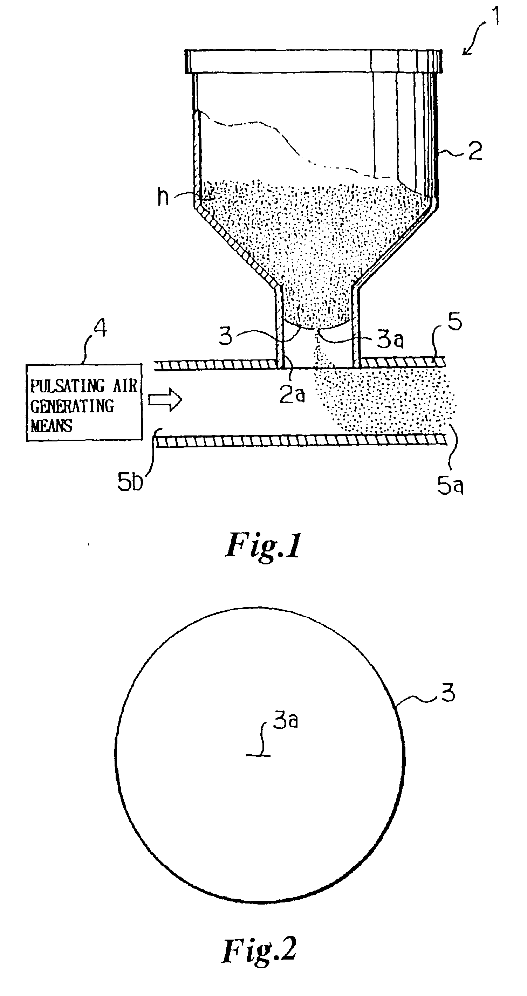

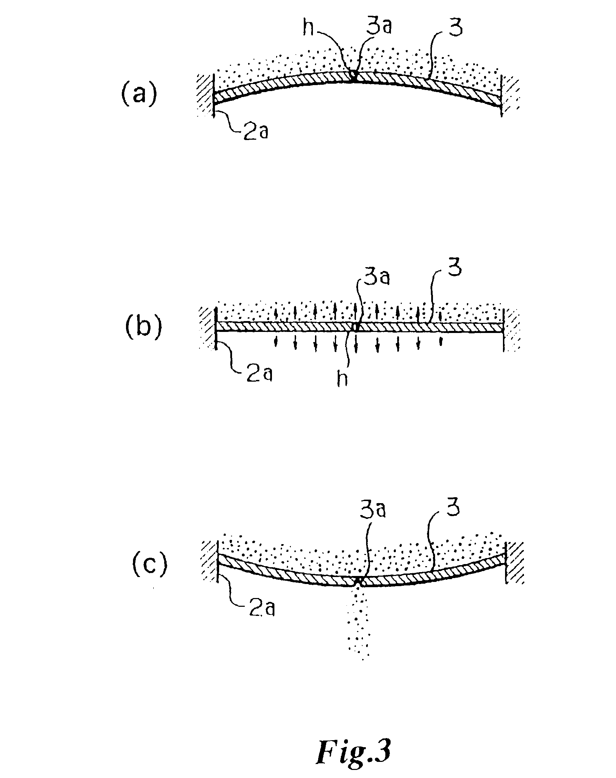

Fig. 1 shows construction of a spray apparatus with a tank for storing powdered material according to the present invention. Fig. 2 is a plan view of an elastic membrane with a cut opening and Figs. 3 (a) - (c) show how the elastic membrane works when pulsating vibration air is supplied.

As seen from the drawings, a tank 2 is formed with a narrowed bottom and has a storage body for storing powdered material h. And the storage body has a bottom opening 2a which is provided with an elastic membrane 3 formed with a cut opening 3a in the center. The elastic membrane 3 is preferably made of a soft thin Teflon plate or a thin silicon plate and has the cut opening 3a which may be formed by using a sharp edged tool such as a razor. The size of the cut opening 3a is appropriately defined in accordance with the particle diameter of powdered material to be sprayed. The applicant has perceived that 2mm - 3mm diameter in the size of the cut opening 3a is preferable when the particle diameter is 250 µm and the spray amount per unit time is about 1g/minute.

Pulsating vibration air is fed from a pulsating vibration air generating means 4 provided at one end 5b of a communication pipe 5 and is supplied into the elastic membrane 3 from downward. The communication pipe 5 is provided at one end with an injection port 5a provided for spraying. Wave height and frequency of pulsating vibration air should be defined according to the physical property of powdered material h to be sprayed and the elastic membrane 3. As to the value of the frequency of pulsating vibration air, a relatively low value should be set in order to give a large vibration to the elastic membrane 3. For example, a frequency from 10Hz to 40Hz will be preferable. According to a spray apparatus 1 with such a construction, the elastic membrane 3 is forcedly vibrated up and down in compliance with the frequency of the pulsating vibration air when the elastic membrane 3 receives pulsating vibration air, and in the meantime the periphery of the membrane 3 is deformed to make a node and whereas the center part around the cut opening 3a is deformed to make an antinode as shown in Fig. 3(a) and Fig. 3(c).

Fig. 3 shows more clearly how the elastic membrane 3 works at this time, namely when the elastic membrane 3 receives the pulsating vibration air. As shown in Fig. 3(a), when the elastic membrane 3 is elastically deformed like it is lifted up, the cut opening 3a is widened in the upper end and is closed in the bottom end so that the cut opening 3a is deformed to open in V-shaped form. Namely, the cut opening 3a opens in such a manner that the cut end facing to the inner side of the tank 2 is widened and the other cut end facing to the inner side of the communication pipe 5 is closed. As a result, the powdered material h stored in the tank 2 easily enters into the V-shaped cut opening 3a. And then the elastic membrane 3 is elastically deformed like it is pushed down as shown in Fig. 3(c) after the elastic membrane 3 has returned to a neutral position where the powdered material stuck in the cut opening 3a is once tightly held in the cut opening 3a as shown in Fig. 3(b) and in the meantime the cut opening 3a is widened in the bottom end and is closed in the upper end so that the cut opening 3a is deformed to open in versa V-shaped form as shown in Fig. 3(c). As a result, powdered material held in the cut opening 3a is energetically emitted from the versa V-shaped cut opening 3a. According to the spray apparatus of the present invention, the powdered material stored in the tank 2 can be accurately sprayed from the injection port 5a in compliance with the frequency of the pulsating vibration air while the elastic membrane 3 receives pulsating vibration air via the communication pipe 5 from the pulsating vibration air generating means 4.

In other words, according to the spray apparatus 1 of the present invention, the elastic membrane 3 can be vibrated up and down to make an antinode and a node in a well known manner like oscillation technology so that the cut opening 3a repeatedly holds and emits powdered material h stored in the tank 2 every time the cut opening 3a opens and closes by receiving pulsating vibration air. As a result of such operation of the membrane 3, even liquid-like or slurry powdered material stored in the tank 2 can be uniformly and diffusely sprayed from the cut opening 3a without causing clogging.

Therefore, the spray amount of the powdered material can be accurately controlled by varying the frequency of the wave height of the pulsating vibration air. Further, bulky and soft powdered material with a large specific volume in which the ratio of air to powder is rather large, even liquid-like material or slurry material can be quantitatively and continuously sprayed without causing clogging.

In the above-mentioned embodiment, the cut-opening is formed at the center of the elastic membrane, but a plurality of bores may be formed around the center thereof.

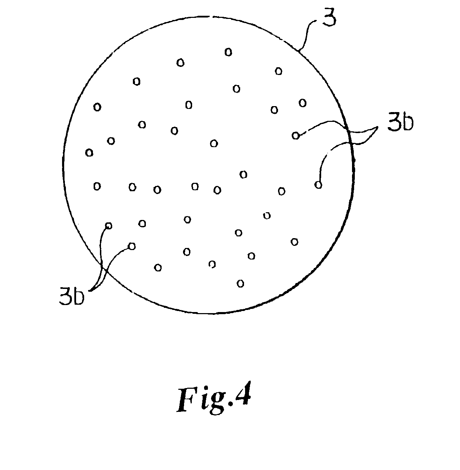

Fig. 4 is a plan view of an elastic membrane 3 with a plurality of little bores 3b. This elastic membrane 3 is attached to the bottom opening 2a of the tank 2 like the above-mentioned embodiment. The plurality of little bores 3b are made by punching all around the center and the surface of the elastic membrane 3. The bores may be made in various shapes or almost equal shape. When pulsating vibration air is supplied from the bottom of the tank 2, the elastic membrane 3 is forcedly vibrated up and down in compliance with the frequency of the pulsating vibration air, while the center of the elastic membrane 3 is deformed to make an antinode and the periphery of the elastic membrane 3 is deformed to make a node as in the above-mentioned manner.

In the above-mentioned embodiment, the size of the bores of the elastic membrane is almost the same but the size may be differed.

In this embodiment, powdered material h can be emitted quantitatively and continuously in an extremely small quantity through the bores 3b without causing clogging. Accordingly, the spray amount of the powdered material stored in the tank 2 can be accurately controlled even in extremely small quantity by varying the frequency or the wave height of the pulsating vibration air. And further, even liquid-like material or slurry material can be emitted through the bores 3b quantitatively and continuously without causing clogging. In this embodiment, the diameter of the bores 3b should be defined preferably so as not to drop the powdered material through the bores 3b when the pulsating vibration air is not supplied, namely when the elastic membrane 3 is at a standstill. For example, the diameter of the bores 3b will be preferably defined as 0.5 mm or so. According to this embodiment, it is more suited for quantitatively spraying powdered material in a relatively large quantity in which the size of the particle is relatively large compared with the above-mentioned embodiment, namely the spray apparatus having the elastic membrane 3 with the cut opening 3a.

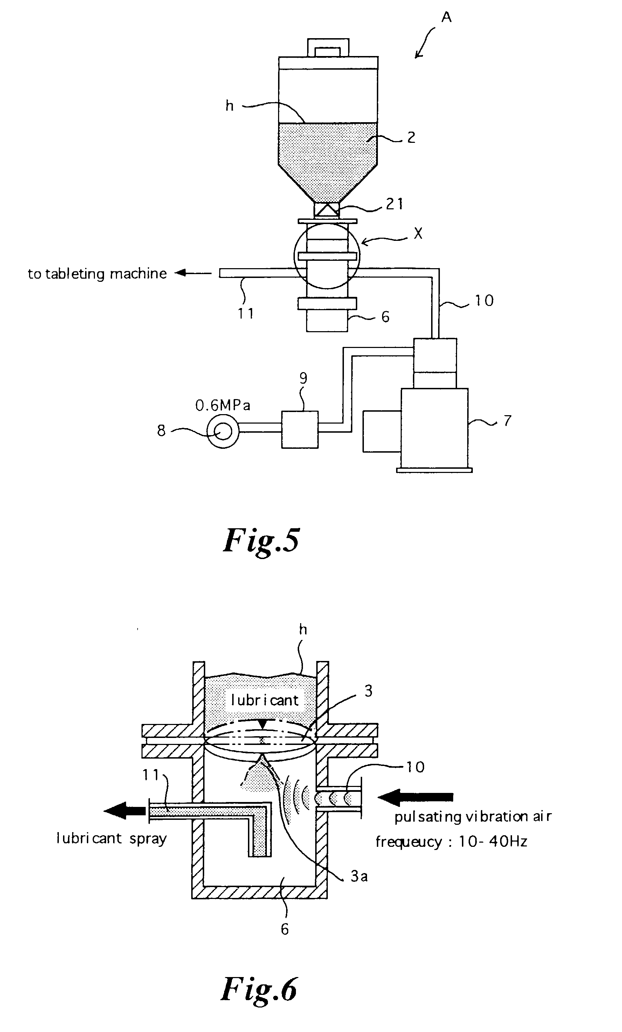

Fig. 5 and Fig. 6 show another example of a spray apparatus for continuously supplying lubricant to a tableting machine when medical tablets are manufactured. Such a spray apparatus A is used for spraying lubricant on a die and a punch of a tableting machine. An elastic membrane 3 is provided at the bottom of a lubricant hopper 2 with a supply valve 21 thereunder. A diffusing chamber 6 is further provided under the valve 21 and is connected with an air conduit 10 connecting to a pulsating vibration air generator 7 and a spray conduit 11 for feeding lubricant to the tableting machine. The pulsating vibration air generator 7 is connected with an air supply source 8 such as a compressor via a flow control means 9, whereby transport air supplied from the air supply source 8 is fed together with pulsating vibration air to the diffusing chamber 6 through the air conduit 10.

According to the above-mentioned construction, when only the air supply source 8 is driven, the elastic membrane 3 may not be vibrated up and down. Therefore, transport air fed to the diffusing chamber 6 from the air supply source 8 is supplied to the tableting machine through the spray conduit 11 so that powdered material remained in the diffusing chamber 6 or attached on a part of the tableting machine can be blown and cleaned. In this case, when the supply valve 21 of the lubricant hopper 2 is closed, the lubricant h would not fall into the diffusing chamber 6 even if the transport pressure of the transport air introduced from the air supply source 8 to the diffusing chamber 6 is increased. As the result, drying and cleaning of the spray by means of highly pressurized air may be possible.

However, when the pulsating vibration air generator 7 is driven in addition to the air supply source 8, the elastic membrane 3 vibrates up and down since the transport air has vibration energy enough to vibrate the elastic membrane 3. Then, the lubricant h falls in the diffusing chamber 6 continuously to be sprayed therein and the sprayed lubricant h can be fed to the tableting machine through the spray conduit 11 following the flow of the transport air.

### [Experiment]

One example of the experiment executed by the present inventors will be explained hereinafter.

The value of the spray amount per minute (mg/min) and the value of the CV (coefficient of variation) of the sprayed material obtained from the experiment are as described in Table 1 where the number or the positioning of each cut opening and bores are varied, and stearin acid magnesium with average diameter of 10 µm which may be used for lubricant as the powdered material to be sprayed and an elastic membrane with 38 µm in diameter and 1.0mm in thickness are employed. In this case, pulsating vibration air with 20Hz frequency and 0.2 MPa pressure is also employed.

The result is as follows;

**Table 1**

| Kind of Bore | Number | Position | Amount(mg/min) | CV(%) |
|---|---|---|---|---|
| Sample 1 cut opening (2mm slit) | 1 | center | 800 | 3-4 |
| Sample 2 little bore (φ 0.5mm) | 1 | center | 300 | 12-15 |
| Sample 3 little bores (φ 0.5mm) | 5 | around the center | 1000 | 10-15 |

As seen from the Table 1, it should be noted that the CV of sample 1 with a cut opening is smaller than the sample 2 or 3 compared with each sample, namely the former is one fourth or one fifth of the latter and the spraying amount of the former is also stabler than that of the latter. It is assumed that it depends on the fact that sample 1 with a cut opening is larger in deforming rate than sample 2 or 3 with bores and therefore it rarely causes plug up or clogging trouble in sample 1. The table also shows that the more the bores increases in number, the larger the amount of the spraying is, however the amount of the spraying is not proportional to the number of the bores. From the view of the applicant's analysis, it is also assumed that the oscillation amplitude of the elastic membrane becomes larger in the part near the center and smaller in the part further departing from the center so that the opening rate of the bores also becomes smaller in the part further departing from the center than in the part near center. And it has been confirmed by the experiment that the spraying amount decreases when the cut opening is shiftedly made in the part departing from the center of the elastic membrane.

It should be also noted that the diameter of the little bores formed in the elastic membrane is dependently defined upon that the bores do not allow the powdered material to drop out of the bores when pulsating vibration air is not applied and it depends on the physical characteristics of the powdered material to be sprayed. In the experiment executed by the applicant in which stearin acid magnesium is used as the powdered material to be sprayed, the elastic membrane with bores whose diameter is at maximum 1.0mm are employed.

According to the spray apparatus of the present invention wherein such an elastic membrane is used as an injection valve, the elastic membrane is once expanded at the beginning of air supply when steady flow is supplied to the elastic membrane. However, the deformation of the elastic membrane does not appear. The powdered material drops out of the opening or bores of the elastic membrane but it does not occur continuously because the elastic membrane keeps its expanded shape. However, when pulsating vibration air is supplied, the elastic membrane vibrates up and down regularly according to the frequency of pulsating vibration air as mentioned above. In this case a continuous and quantitative cut-out operation is generated so that powdered material stored over the elastic membrane is continuously sprayed out of the bores to the space below the elastic membrane. Therefore, the spray amount of powdered material can be accurately controlled by varying the number of bores, the position of bores or cut opening, and the frequency of pulsating vibration air.

The elastic membrane with the cut opening at the center thereof can execute the most accurate control as mentioned above.

## Claims

1. A spray apparatus for spraying powdered material activated by pulsating vibration air, characterized in that the spray apparatus comprises:
- an elastic membrane (3) with an opening (3a, 3b),
- a tank (2) for storing powdered material (h) provided with the elastic membrane (3) at the bottom opening (2a) thereof, and
- pulsating vibration air generating means (4) for supplying pulsating vibration air to the elastic membrane (3), whereby the elastic membrane (3) is forcedly vibrated up and down by receiving the pulsating vibration air so that the powdered material (h) is uniformly and diffusely sprayed.

2. The apparatus according to claim 1,
characterized in that
the opening of the elastic membrane (3) is a cut opening (3a) formed at the centre of the elastic membrane (3).

3. The apparatus according to claim 1,
characterized in that
the opening of the elastic membrane (3) comprises a plurality of little bores (3b) with various shapes or almost equal shape.

4. The apparatus according to any of claims 1 to 3,
characterized in that
the spray apparatus further comprises a communication pipe (5) communicating with the bottom opening (2a) of the tank (2) which pipe (5) has at one end an injection port (5a) and at the other end a connecting port (5b) connected with the pulsating vibration air generating means (4),
whereby the elastic membrane (3) is forcedly vibrated up and down when the pulsating vibration air generating means (4) is activated so that the powdered material (h) is uniformly and diffusely sprayed from the injection port (5a).

5. The apparatus according to any of claims 1 to 4,
characterized in that
the powdered material (h) is a lubricant to be sprayed on medical tablets in the process of manufacturing medical tablets.

6. A method for spraying powdered material activated by pulsating vibration air, using a spray apparatus which comprises an elastic membrane (3) with an opening (3a, 3b), a tank (2) for storing powdered material provided with the elastic membrane (3) at the bottom opening (2a) thereof, and pulsating vibration air generating means (4) for supplying pulsating vibration air,
characterized in that the method comprises the following steps
- filling the tank (2) with powdered material (h), and
- applying the pulsating vibration air to the elastic membrane (3) of the tank (2) from downward so as to forcedly vibrate the elastic membrane (3) up and down whereby the powdered material (h) stored in the tank (2) is continuously, uniformly and diffusely discharged from the opening (3a, 3b) of the elastic membrane (3) in accordance with the frequency of the pulsating vibration air.

7. The method according to claim 6,
characterized in that
the opening of the elastic membrane (3) is a cut opening (3a) formed at the centre of the elastic membrane (3).

8. The method according to claim 6,
characterized in that
the opening of the elastic membrane (3) comprises a plurality of little bores (3b) with various shapes or almost equal shape.

9. The method according to any of claims 6 to 8,
characterized in that
the powdered material (h) is a lubricant to be sprayed on medical tablets in the process of manufacturing medical tablets.

## Patentansprüche

1. Sprühvorrichtung zum Sprühen von pulverisiertem Material, das durch pulsierende Vibrationsluft aktiviert wird,
dadurch gekennzeichnet,
daß die Sprühvorrichtung folgendes aufweist:
- eine elastische Membran (3) mit einer Öffnung (3a, 3b),
- einen Tank (2) zur Aufnahme von pulverisiertem Material (h), der an seiner Bodenöffnung (2a) mit der elastischen Membran (3) versehen ist, und
- eine Einrichtung (4) zum Erzeugen von pulsierender Vibrationsluft, um der elastischen Membran (3) pulsierende Vibrationsluft zuzuführen, so daß die elastische Membran (3) durch Beaufschlagen mit der pulsierenden Vibrationsluft zwangsweise aufwärts und abwärts in Schwingungen versetzt wird, so daß das pulverisierte Material (h) gleichmäßig und verteilt versprüht wird.

2. Vorrichtung nach Anspruch 1,
dadurch gekennzeichnet,
daß die Öffnung der elastischen Membran (3) ein Ausschnitt (3a) ist, der in der Mitte der elastischen Membran (3) gebildet ist.

3. Vorrichtung nach Anspruch 1
dadurch gekennzeichnet,
daß die Öffnung der elastischen Membran (3) eine Vielzahl kleiner Bohrungen (3b) unterschiedlicher Gestalt oder nahezu gleicher Gestalt aufweist.

4. Vorrichtung nach einem der Ansprüche 1 bis 3,
dadurch gekennzeichnet,
daß die Sprühvorrichtung ferner folgendes aufweist: ein Verbindungsrohr (5), das mit der Bodenöffnung (2a) des Tanks (2) in Verbindung steht und das an dem einen Ende eine Injektionsöffnung (5a) und an dem anderen Ende eine Verbindungsöffnung (5b) hat, die mit der Einrichtung (4) zum Erzeugen von pulsierender Vibrationsluft verbunden ist,
so daß die elastische Membran (3) zwangsweise aufwärts und abwärts in Schwingungen versetzt wird, wenn die Einrichtung (4) zum Erzeugen von pulsierender Vibrationsluft aktiviert ist, so daß das pulverisierte Material (h) gleichmäßig und verteilt aus der Injektionsöffnung (5a) versprüht wird.

5. Vorrichtung nach einem der Ansprüche 1 bis 4,
dadurch gekennzeichnet,
daß das pulverisierte Material (h) ein Gleitmittel ist, das in einem Verfahren zur Herstellung von medizinischen Tabletten auf medizinische Tabletten zu sprühen ist.

6. Verfahren zum Versprühen von pulverisiertem Material, das durch pulsierende Vibrationsluft aktiviert wird, unter Verwendung einer Sprühvorrichtung, die folgendes aufweist: eine elastische Membran (3) mit einer Öffnung (3a, 3b), einen Tank (2) zur Aufnahme von pulverisiertem Material, der an seiner Bodenöffnung (2a) mit der elastischen Membran (3) versehen ist, und eine Einrichtung (4) zum Erzeugen von pulsierender Vibrationsluft, um pulsierende Vibrationsluft zuzuführen,
dadurch gekennzeichnet,
daß das Verfahren die folgenden Schritte aufweist:
- Füllen des Tanks (2) mit pulverisiertem Material (h) und
- Aufbringen der pulsierenden Vibrationsluft auf die elastische Membran (3) des Tanks (2) von unten, um die elastische Membran (3) zwangsweise aufwärts und abwärts in Schwingungen zu versetzen, so daß das in dem Tank (2) aufgenommene pulverisierte Material (h) in Abhängigkeit von der Frequenz der pulsierenden Vibrationsluft kontinuierlich, gleichmäßig und verteilt aus der Öffnung (3a, 3b) der elastischen Membran (3) abgegeben wird.

7. Verfahren nach Anspruch 6,
dadurch gekennzeichnet,
daß die Öffnung der elastischen Membran (3) ein Ausschnitt (3a) ist, der in der Mitte der elastischen Membran (3) gebildet ist.

8. Verfahren nach Anspruch 6,
dadurch gekennzeichnet,
daß die Öffnung der elastischen Membran (3) eine Vielzahl kleiner Bohrungen (3b) unterschiedlicher Gestalt oder nahezu gleicher Gestalt aufweist.

9. Verfahren nach einem der Ansprüche 6 bis 8,
dadurch gekennzeichnet,
daß das pulverisierte Material (h) ein Gleitmittel ist, das in einem Verfahren zur Herstellung von medizinischen Tabletten auf medizinische Tabletten zu sprühen ist.

## Revendications

1. Dispositif de projection, destiné à la projection d'une matière en poudre, activée par de l'air de vibration pulsatoire, caractérisé en ce que le dispositif de projection comprend :
- une membrane élastique (3), comportant une ouverture (3a, 3b),
- un réservoir (2) pour contenir la matière en poudre (h) et pourvu, au niveau de son ouverture de fond (2a), de la membrane élastique (3), et
- un moyen générateur d'air de vibration pulsatoire (4), afin de fournir de l'air de vibration pulsatoire à la membrane élastique (3), la membrane élastique (3) étant soumise de force à des vibrations vers le haut et vers le bas, tandis qu'elle reçoit l'air de vibration pulsatoire, si bien que la matière en poudre (h) est projetée de manière uniforme et diffuse.

2. Dispositif selon la revendication 1, caractérisé en ce que l'ouverture de la membrane élastique (3) est une ouverture découpée (3a), pratiquée au centre de la membrane élastique (3).

3. Dispositif selon la revendication 1, caractérisé en ce que l'ouverture de la membrane élastique (3) se compose d'une pluralité de petits orifices (3b) de formes variées ou de forme presque égale.

4. Dispositif selon l'une quelconque des revendications 1 à 3, caractérisé en ce que le dispositif de projection comprend en outre :
un conduit de communication (5), qui communique avec l'ouverture de fond (2a) du réservoir (2), lequel conduit (5) comporte, à une extrémité, un passage d'injection (5a) et, à l'autre extrémité, un passage de raccordement (5b), relié au moyen générateur d'air de vibration pulsatoire (4),
si bien que la membrane élastique (3) est soumise de force à des vibrations vers le haut et vers le bas lorsque le moyen générateur d'air de vibration pulsatoire (4) est mis en fonction, de telle sorte que la matière en poudre (h) soit uniformément projetée et diffusée à partir du passage d'injection (5a).

5. Dispositif selon l'une quelconque des revendications 1 à 4, caractérisé en ce que la matière en poudre (h) est un lubrifiant à projeter sur des comprimés médicamenteux au cours de la fabrication des comprimés médicamenteux.

6. Procédé de projection d'une matière en poudre, activée par de l'air de vibration pulsatoire, au moyen d'un dispositif de projection, qui comprend une membrane élastique (3) comportant une ouverture (3a, 3b), un réservoir (2) pour contenir la matière en poudre et pourvu, au niveau de son ouverture de fond (2a), de la membrane élastique (3), et un moyen générateur d'air de vibration pulsatoire (4), afin de fournir de l'air de vibration pulsatoire, caractérisé en ce que le procédé comprend les étapes suivantes :
- remplissage du réservoir (2) par de la matière en poudre (h), et
- application de l'air de vibration pulsatoire à la membrane élastique (3) du réservoir (2), depuis le dessous de celle-ci, afin de faire vibrer de force la membrane élastique (3) vers le haut et vers le bas, si bien que la matière en poudre (h) , stockée dans le réservoir (2), est projetée de manière continue, uniforme et diffuse à partir de l'ouverture (3a, 3b) de la membrane élastique (3), en fonction de la fréquence de l'air de vibration pulsatoire.

7. Procédé selon la revendication 6, caractérisé en ce que l'ouverture de la membrane élastique (3) est une ouverture découpée (3a), pratiquée au centre de la membrane élastique (3).

8. Procédé selon la revendication 6, caractérisé en ce que l'ouverture de la membrane élastique (3) se compose d'une pluralité de petits orifices (3b) de formes variées ou de forme presque égale.

9. Procédé selon l'une quelconque des revendications 6 à 8, caractérisé en ce que la matière en poudre (h) est un lubrifiant à projeter sur des comprimés médicamenteux au cours de la fabrication des comprimés médicamenteux.
